# EUROPÄISCHE PATENTSCHRIFT

(11) **EP 1 198 326 B1**
(45) Veröffentlichungstag und Bekanntmachung des Hinweises auf die Patenterteilung: **07.01.2004**
(21) Anmeldenummer: 00956314.9
(22) Anmeldetag: 27.07.2000
(51) Int. Cl.: B23Q 1/48, B27C 5/06

(54) **VORRICHTUNG ZUM HERSTELLEN VON RUND- UND SEGMENTBÖGEN AN WERKSTÜCKEN, INSBESONDERE AUS HOLZ**
DEVICE FOR PRODUCING SEMICIRCULAR OR SEGMENTAL ARCHES ON WORK PIECES, ESPECIALLY WOODEN WORK PIECES
DISPOSITIF DE REALISATION DE PARTIES ARRONDIES OU BOMBEES SUR DES PIECES A USINER, EN PARTICULIER EN BOIS

(30) Priorität: 27.07.1999 DE 29913118 U; 21.03.2000 DE 20005253 U; 21.03.2000 DE 20005251 U; 22.03.2000 DE 20005314 U; 22.03.2000 DE 20005313 U
(43) Veröffentlichungstag der Anmeldung: 24.04.2002
(73) Patentinhaber: Söder, Dierk, 29664 Walsrode (DE)
(72) Erfinder: Söder, Dierk, 29664 Walsrode (DE)
(74) Vertreter: Einsel, Martin
(86) Internationale Anmeldenummer: PCT/EP2000/007234
(87) Internationale Veröffentlichungsnummer: WO 2001/007203

(56) Entgegenhaltungen:
- DE-A- 4 016 012

## Beschreibung

Die Erfindung betrifft eine Vorrichtung zum Herstellen von Rund- und Segmentbögen an Werkstücken, insbesondere aus Holz, mit einer Werkstückmaterial entfernenden, stationär angeordneten Einrichtung, bei der ein Maschinentisch mit einer Auflagefläche vorgesehen ist, bei der zwei Führungsprofile vorgesehen sind, die jeweils eine im Wesentlichen geradlinige Anlagekante bilden, bei der die beiden Anlagekanten während des Bearbeitungsvorganges miteinander einen Winkel einschließen, an dessen Scheitelpunkt die Werkstückmaterial entfernende Einrichtung, z.B. Fräswerkzeug angeordnet ist, bei der die Führungsprofile um den Scheitelpunkt verschwenkbar und feststellbar sind, und bei der Anführspitzen vorgesehen sind, die an dem Werkstück an jeweils zwei Spannweitenpunkten des herzustellenden Rundbeziehungsweise Segmentbogens angeordnet sind und von denen sich je eine während des Bearbeitungsvorganges gegen je eine der beiden Anlagekanten abstützen (siehe DE 4 016 012 A).

Bogenförmige Werkstücke aus Holz sind beispielsweise für Rundbogenfenster erforderlich. Auch Segmentbögen werden durch Rundfräsen von Rohstücken hergestellt. Diese Rohstücke oder Rohlinge sind üblicherweise mit der Bandsäge grob ausgesägte Platten oder plattenförmige Teile, deren Sägekanten noch um einige Millimeter die beabsichtigte Rundung überragen. Diese müssen zur Fertigstellung beispielsweise von Türbögen, Rundbogenfenstern oder Möbelteilen von der Außen- beziehungsweise Innenseite her bearbeitet werden.

Bisher ist es in der Praxis üblich, eine genaue Schablone für den gewünschten Rundbogen herzustellen, die auf dem Bogen-Rohstück angebracht wird. Das Werkstück wird dann von Hand geführt und an einem rotierenden Werkzeug auf einem Maschinentisch aufliegend vorbeibewegt. Das rotierende Werkzeug ist mit einem kugelgelagerten Anlaufring kombiniert, gegen das die an dem Werkstück befestigte Schablone anliegt. Beim Vorbeischieben entsteht dadurch ein ständiger rollender Kontakt, der den Eingriff der Arbeitsflächen des rotierenden Werkzeuges mit der Außen- beziehungsweise Innenseite des Werkstückes begrenzt.

Dieses Verfahren zum Fräsen von Rundbögen oder bogenförmigen Werkstücken hat den Nachteil, dass die Vorfertigung der maßstabgetreuen und dem bogenförmigen Verlauf des Werkstückes entsprechenden Schablonen mit einem erheblichen Zeit- und Materialaufwand einhergeht. Die Maß- und Formqualität des Werkstückes hängt von der Genauigkeit der Schablone wesentlich ab.

Zur Verbesserung dieses Verfahrens ist es aus der DE 37 08 019 A1 bekannt, eine Vorrichtung zum Fräsen von Rundbögen aus Holz mit mehreren Spannhaltern für das Werkstück auszurüsten, die jeweils an einem Radialarm in Längsrichtung dieses Armes verstellbar und feststellbar angeordnet sind.

Eine andere, aus der DE 33 33 965 A1 bekannte Vorrichtung zum Formfräsen von bogenförmigen Holzwerkstücken besitzt eine Tragachse für einen Werkstückträger. Ein Rundbogenrohstück wird um eine Mittelpunktsachse drehbar gelagert und von Spannhaltern arretiert.

Diese Spannhalter sind auf Radialarmen aufgespannt, wodurch eine Bearbeitung entlang einer inneren bzw. äußeren Kurvenbahn erfolgt. Dazu muss allerdings die radiale Stellung der Mittelpunktachse bezüglich der Werkzeugachse geändert werden.

Bei diesen vorgenannten Vorrichtungen ist demnach ein Werkstück um eine Mittelpunktsachse drehbar gelagert, wobei es von Spannhaltem arretiert wird, die sich auf Radialarmen verschiebbar feststellen lassen. In Folge der beweglichen Mittelpunktsachsen beanspruchen diese Vorrichtungen entweder vor oder hinter der Tischfräsmaschine einen erheblichen Raum. Das lässt sich aufgrund des Arbeitsprinzips auch nicht vermeiden, da alle zu fräsenden Rund- oder Segmentbögen eine Ausrichtung nach einem Mittelpunkt voraussetzen. Dies wird bereits bei flachen Segmentbögen zu einem Problem, deren Spannweite bei nur etwa 2 m liegt.

Zur Lösung dieser Probleme schlägt die DE 40 16 012 C2 eine Vorrichtung zum Herstellen von Rund- und Segmentbögen vor, bei der aus einem Rundbogenrohling ohne Vorfertigen einer Schablone ein maßgerechter Bogen ausgefräst wird. Dabei wird in geschickter Weise von dem umgekehrten Prinzip des mathematischen Satzes des Thales Gebrauch gemacht.

Diese Vorrichtung funktioniert zwar ausgezeichnet und löst das Problem, ist aber unverändert eine recht aufwendige Konstruktion mit einem komplexen Aufbau. Insbesondere nach oben wird durch eine Reihe von Gelenkmechanismen eine in vielen Fällen nicht gewünschte Höhe erreicht.

Aufgabe der vorliegenden Erfindung ist es demgegenüber, eine Vorrichtung zum Herstellen von bogenförmigen Werkstücken insbesondere aus Holz vorzuschlagen, bei der die Vorteile der bekannten Vorrichtungen gewahrt bleiben, trotzdem aber eine einfachere Konstruktion mit weniger Aufwand benötigt wird.

Diese Aufgabe wird dadurch gelöst, dass Einrichtungen vorgesehen sind, die das Werkstück in einer vorbestimmten, in konstantem Abstand zur Auflagefläche des Maschinentisches befindlichen Ebene halten, und dass die beiden Führungsprofile in einer Ebene unterhalb der Ebene des Werkstückes oberhalb der Auflagefläche des Maschinentisches angeordnet sind.

Mit einer solchen Maßnahme ist die Aufgabe mit einfachsten und sehr kostengünstigen sowie gleichzeitig zuverlässigen Mitteln lösbar. Die Vorteile aus einer Vorrichtung gemäß der DE 40 16 012 C2 bleiben erhalten. Außerdem sind im Verhältnis zu dieser bekannten Konstruktion keine tragenden mehr Elemente erforderlich, da die Führungsprofile eben nicht oberhalb des von dem Werkstück und dem Fräskopf gebildeten plattenförmigen Bereiches angeordnet sind. Sie liegen stattdessen unterhalb dieser Bearbeitungsebene. Sie können direkt auf dem Maschinentisch aufliegen. Sämtliche tragenden Bauteile aus dem Stand der Technik wie beispielsweise Drehgelenke, Führungszylinder zur Höhenverstellung des Gerüstes, Schwenkvorrichtungen und dergleichen können entfallen.

Das Werkstück liegt nicht auf dem Maschinentisch auf, sondern in einem konstanten Abstand davon. Die Führungsprofile liegen unterhalb des Werkstückes oberhalb des Maschinentisches in dem sich ergebenden Zwischenraum.

Besonders bevorzugt sind Auflageplatten vorgesehen, die dann die Auflagefläche bilden. Eine Auflageplatte ist ausreichend, aus Gewichts- und Transportgründen kann die Auflageplatte aber auch aus mehreren nebeneinander anzuordnenden Segmenten bestehen. Der Vorteil der Auflageplatten besteht unter anderem darin, praktisch jeden herkömmlichen Maschinentisch nachträglich ausrüsten zu können und auch eine beliebige gewünschte Tischflächenvergrößerung zu erreichen.

Die Elemente, die das Werkstück in dem konstanten Abstand von der Ebene des Maschinentisches halten und so eine Anordnung der Führungsprofile in dem Bereich dazwischen ermöglichen, können konstruktiv sehr einfach sein. Stützplatten und unter die Werkstücke montierbare Abstützungen sind gut geeignet. Die Stützplatten können abnehmbar und verschwenkbar sein, so dass keine Beeinträchtigung bei der Führung des Werkstückes an den Führungsprofilen erfolgt.

Bevorzugt ist vorgesehen, dass in der Auflagefläche konzentrisch zum Scheitelpunkt Nuten vorgesehen sind, in welchen Nutensteine laufen, dass an den Führungsprofilen Elemente, z.B. Laschen angeordnet sind, und dass eine Feststellbarkeit der Nutensteine vorgesehen ist. Die Nuten können insbesondere bei separaten Auflageplatten einfach und von vornherein in diesen Auflageplatten vorgesehen werden und sind so durch Abbau der Auflageplatten auch wieder entfernbar.

Die Kostenstruktur für eine derartige erfindungsgemäße Vorrichtung ist sehr günstig, was insbesondere für einen kleineren Handwerksbetrieb wichtig ist, der sich aus Kostengründen keine CNC-gesteuerte Anlage leisten kann. Es ergibt sich eine sehr günstige Alternative für Vorrichtungen nach der DE 40 16 012 C2, mit der praktisch die gleichen Ergebnisse mit weniger Aufwand erzielt werden können.

Ein weiterer Vorteil entsteht dadurch, dass die erfindungsgemäße Vorrichtung auch nachträglich auf bereits vorhandene herkömmliche Tischfräsmaschinen aufbaubar ist. Dies kann dadurch geschehen, dass einfach der übliche gerade Fräsanschlag abgebaut und durch die erfindungsgemäßen Aufbauten ersetzt wird. Eine Person kann ohne zusätzliche Hilfestellung diese Umrüstung vornehmen.

Das ist insbesondere dann möglich, wenn zwei Auflageplattenhälften vorgesehen sind, die auf einen vorhandenen Maschinentisch einer Tischfräsmaschine aufgelegt und verschraubt werden.

Eine solche Umrüstung ist bei keiner einzigen Vorrichtung aus dem Stand der Technik möglich, schon aufgrund der Vielzahl der dabei aufzubauenden Elemente.

Der Funktionsweise der erfindungsgemäßen Vorrichtung liegt wiederum das mathematische Gesetz des sogenannten Thales-Kreises zugrunde. Ein in einem Bogen einbeschriebenes Dreieck hat stets den gleichen Scheitelwinkel, unabhängig davon, wo sich dieser auf der Bogenlinie befindet. Der Fräskopf kann praktisch als punktförmig angenommen werden. Seine endliche Ausdehnung führt zu einer geringen Abweichung von der Kreisform bei der Führung, die in der Praxis aber nicht ins Gewicht fällt.

Dadurch, dass das Werkstück praktisch oberhalb von sämtlichen erforderlichen Mechanismen liegt, keine Schwenkarme oder Werkstückführungen oberhalb des Werkstückes angeordnet werden müssen und auch sonst keine Aufbauten erforderlich sind, ist die Dicke des Werkstückes praktisch beliebig. Nach oben wird lediglich durch die Höhe des Fräswerkzeuges eine Grenze gesetzt, da dieses die Bearbeitungsdicke natürlich beschränkt. Sämtliche beweglichen und verschiebbaren Teile befinden sich unterhalb der Werkstückebene und wirken so miteinander zusammen, dass sie das Werkstück entweder abstützen oder unter dem Werkstück beweglich sind.

Durch die deutlich kürzeren Wege zwischen dem Maschinentisch und diesen Elementen werden diese Bauteile zum einen weniger anspruchsvoll und zuverlässiger und zum anderen natürlich auch deutlich kostengünstiger. Es sind auch keine mehrgelenkigen Bauteile mehr erforderlich, um außen um das Werkstück herumzufassen. Die Formen und Abmessungen des Werkstückes sind sehr variabel. Es könnte auch aus dem Vollen heraus gefräst werden, wenn dies aus bestimmten Gründen wünschenswert wäre, es ist also nicht einmal erforderlich, schon eine Vorformung vorzunehmen. Gleichwohl wird man dieses üblicherweise schon aus Zeitersparnisgründen vornehmen.

Bevorzugt wird die Vorrichtung bei einem Fräsmaschinentisch eingesetzt, durch den ein vertikaler Fräsdorn ragt. Geschieht dies beispielsweise bei einer vorhandenen Tischfräsmaschine, bei der der ortsfeste übliche gerade Fräsanschlag durch einen erfindungsgemäßen Aufbau ersetzt ist, so können die selben Fräswerkzeuge für die Rundbogenbearbeitung verwendet werden, die sonst für gerade Werkstücke zum Einsatz kommen. Das hat den Vorteil, dass es zwischen dem Werkstück mit der geraden Kante und einem Werkstück mit einer gebogenen Kante keine Profildifferenzen gibt. Dieser Vorteil fällt besonders bei solchen Werkstücken ins Gewicht, die beide Elemente aufweisen, wie beispielsweise Rundbogenfenster oder Rundbogentüren.

Die vorderen Führungsprofile verschwenken sich um den Schneidenflugkreis des auf den Fräsdorn aufgespannten Fräswerkzeuges.

Als weiterer Vorteil ist noch festzuhalten, dass die Verschiebung der Anführspitzen in Mittelpunktsrichtung des Werkstückes die Möglichkeit einer stufenlosen Frästiefenverstellung bereitstellt. Die Werkstücke können dadurch auf Werkzeuge mit unterschiedlichem Schneidenflugkreis angepasst werden.

Von weiterem Vorteil ist es, dass die Bearbeitung auch von sehr großen Bogenrohlingen möglich wird. Die Kapazität wird lediglich von der Länge der Anlagekanten begrenzt, da vor und hinter dem Frästisch kein weiterer Raum benötigt wird. So können sämtliche Rund- und Segmentbögen mit nur zwei Führungsprofilen und zwei Werkstückführungen nach Bereitstellung einer Auflagefläche exakt ausgefräst werden.

Es ist möglich, durch das Vorsehen von Lastarmen und Profilverlängerungen die Anlagekante genau auf die Länge zu verlängern, die gerade für ein bestimmtes Werkstück benötigt wird. Auch diese Verlängerungen sind sehr anspruchslos möglich, da die Führungsprofile praktisch auf dem Maschinentisch aufliegen beziehungsweise aufliegen können. Dadurch können auch die Vorteile der unmittelbaren Nachbarschaft zwischen der Oberseite des Maschinentisches und der Unterseite des Führungsprofils für solche Verlängerungen genutzt werden, zum Beispiel das gegenseitige Abstützen.

Besonders einfach ist auch die generelle Verschieb- und Verschwenkbarkeit der beiden Führungsprofile möglich. Konzentrisch zu der Achse des Fräswerkzeugs beziehungsweise der sonstigen Einrichtung zum Entfernen des Werkstückmaterials sind Nuten vorgesehen, die umlaufen oder in Teilbereichen umlaufen. Dadurch kann ein einfaches Feststellen der Führungsprofile und eine Führung der Profile erfolgen. Alternativ oder zusätzlich ist es auch möglich, mittels Einstellscheiben die Führungsprofile jeweils direkt auf Schneidenflugkreis des Fräswerkzeugs auszurichten.

Die Nuten haben darüber hinaus den Vorteil, dass in ihnen die Führungsprofile besonders zuverlässig und gleichzeitig besonders einfach festgelegt werden können.

Eine Feststellbarkeit der Führungsprofile kann aber auch zusätzlich oder alternativ mittels Elektromagneten, Vakuumspannern oder anderen mechanischen Eingriffen erfolgen.

Schließlich wird es auch noch möglich, die Laschen zur Befestigung der Führungsprofile so auszubilden, dass sie sich gegenseitig überschieben, dass sie also in verschiedenen Ebenen liegen. Auf diese Weise kann auch dem Extremfall Rechnung getragen werden, dass bei extremen Winkeln oder Kreisbögen die beiden Laschen aneinander stoßen und auf diese Weise die Bearbeitungsmöglichkeiten begrenzen. Können sie aber in verschiedenen Ebenen übereinandergeschoben werden, so wird auch in diesem Sonderfall noch eine Bearbeitung möglich.

Die Erfindung kann aber auch dann eingesetzt werden, wenn kein Fräsdorn durch einen Maschinentisch ragt. Es wird dann eine stationäre Oberfräsmaschine über der durch die Führungsprofile und die Werkstückführungen gebildeten Bearbeitungsebene angeordnet. Zwischen der Auflageplatte und der Achsenstirnseite des Oberfräswerkzeuges besteht dann noch Platz. Zwar lassen sich die Nachteile des Einsatzes von Oberfräsmaschinen hier nicht vermeiden, es besteht jedoch auf jeden Fall gegenüber herkömmlichen Geräten noch der Vorteil der uneingeschränkten Bearbeitungskapazität bei einem verminderten Platzbedarf. Bei dieser Ausführungsform verschränken sich die vorderen verschiebbaren Führungsprofile der Anschlaglineale um den Mittelpunkt des Oberfräswerkzeuges. Die Anführspitzen der Werkstückführungen stehen in Mittelpunktsrichtung des Werkstückes entsprechend dem Maß des Werkzeugradius' über den zu fräsenden Kreisbogen hinaus. Bei dieser Ausrichtung der Führungsprofile auf den Fräsachsmittelpunkt entstehen sogar absolut kreisbogenförmige Werkstücke.

Weitere bevorzugte Merkmale und Ausführungsformen sind in den Unteransprüchen angegeben.

Im Folgenden wird anhand der Zeichnungen ein Ausführungsbeispiel der Erfindung näher erläutert. Es zeigen:
- **Figur 1**: eine Draufsicht der erfindungsgemäßen Vorrichtung beim Fräsen eines Innenbogens;
- **Figur 2**: eine Draufsicht der Vorrichtung aus Figur 1 beim Fräsen eines Außenbogens;
- **Figur 3**: eine Ansicht eines Bogenrohstücks mit positionierten Werkstückführungen zum Anschrauben, gesehen von unten beim Fräsen eines Außenbogens;
- **Figur 4**: eine Ansicht eines Bogenrohstücks mit positionierten Werkstückführungen und einer Werkstückauflage zum Anschrauben von unten beim Fräsen eines Innenbogens;
- **Figur 5**: eine Schnittdarstellung durch einen vorderen linken Lastarm der Vorrichtung aus Figur 1 mit Hebelkörper;
- **Figur 6**: eine nähere Darstellung einer Fräskopfachse der Vorrichtung aus Figur 1 mit zwei Einstellscheiben und dem vorderen linken Lastarm aus Figur 5 beim Einstellen;
- **Figur 7**: eine Anführspitze der Vorrichtung aus Figur 1 in vier Ansichten;
- **Figur 8**: eine Werkstückführung zum Anschrauben aus der Vorrichtung gemäß Figur 1 in vier Ansichten;
- **Figur 9**: eine Werkstückauflage zum Anschrauben aus der Vorrichtung gemäß Figur 1 in vier Ansichten;
- **Figur 10**: eine alternative Werkstückführung zum Spannen in der Vorrichtung gemäß Figur 1 in vier Ansichten;
- **Figur 11**: eine Grundplatte einer Werkstückführung gemäß Figur 10 in drei Ansichten;
- **Figur 12**: eine Werkstückauflage zum Spannen in einer Vorrichtung gemäß Figur 1 in vier Ansichten.

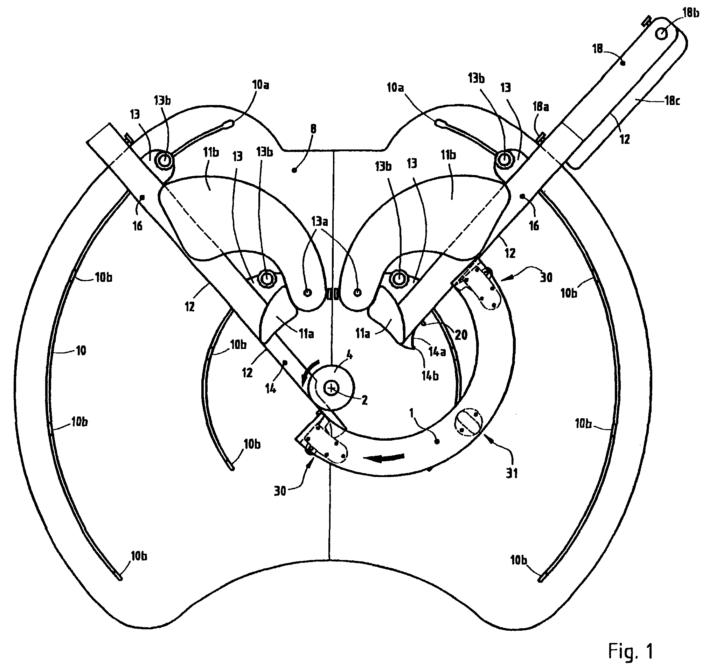

In **Figur 1** ist eine bevorzugte praktische Ausführungsform der Erfindungsform dargestellt. Zu sehen ist eine Draufsicht.

Eine Einrichtung zum Entfernen von Werkstückmaterial, hier ein Fräswerkzeug 4, steht im Mittelpunkt der Anlage. Das Fräswerkzeug 4 rotiert um eine Achse 2. Abgesehen von dieser Rotationsbewegung ist das Fräswerkzeug 4 stationär. Es ragt durch einen Maschinentisch mit einer Auflagefläche 8 nach oben hindurch, dessen flache Oberseite in der Blattebene der Darstellung nach Figur 1 liegt.

Das Bogenrohstück beziehungsweise Werkstück 1 befindet sich oberhalb der Auflagefläche 8 des Maschinentisches. Es hat hier bereits ungefähr die Form, die das spätere fertige bogenförmige Element besitzen soll, steht aber in den einzelnen Richtungen um einige Millimeter oder Zentimeter vor. Mit dem Fräswerkzeug 4 soll nun dieser Überstand am Werkstück 1 beseitigt beziehungsweise abgefräst werden. Angedeutet ist auf dem Werkstück 1 schon seine generelle Bewegungsrichtung, in der Darstellung soll also der Innenbogen gefräst werden, indem der äußere Radius des Fräswerkzeugs 4 mit der Innenseite des Werkstückes 1 in Berührung kommt und das Werkstück 1 dabei an dem Fräswerkzeug 4 in noch zu beschreibender Form vorbeigeführt wird.

Freihändig wäre der Benutzer der Vorrichtung hierzu natürlich nicht in der Lage. Erfindungsgemäß sind nun zwei Führungsprofile 16 vorgesehen. Diese Führungsprofile 16 sind um die Achse 2 des Fräswerkzeugs 4 drehbar und feststellbar. Ihre äußere Kante bildet dabei jeweils eine Tangente oder hierzu parallele Ebene an den Schneidenflugkreis des Fräswerkzeugs 4, also den äußeren Umfang.

Die Führungsprofile 16 sind an der Auflagefläche Maschinentisches befestigt. Sie befinden sich **unterhalb** des Werkstückes 1 und praktisch direkt oberhalb der Auflagefläche des Maschinentisches. Das Werkstück 1 ist also oberhalb der Führungsprofile 16 und damit mit Abstand gegenüber der Auflagefläche 8 angeordnet. Verschiedene im Folgenden noch diskutierte Elemente stellen diesen konstanten und vorbestimmten Abstand des Werkstückes 1 oberhalb der Auflagefläche 8 des Maschinentisches sicher. Es bildet sich also zwischen Auflagefläche 8 und Werkstück 1 ein schicht- oder plattenförmiger Raum, in dem unter anderem die Führungsprofile 16 angeordnet sind.

Die Auflagefläche 8 selbst ist nicht die Oberseite des Maschinentisches selbst. Auf diesem sind eine oder mehrere Auflageplatten angeordnet, die auch die Tischfläche vergrößern und die nierenähnliche abgerundete Außenkontur bereitstellen, die in Figur 1 gut erkennbar ist. Diese Auflageplatte beziehungsweise -platten sind auch nachträglich auf existierende Maschinentische auflegbar.

Um die lösbare Befestigung der Führungsprofile 16 zu ermöglichen weist die Auflagefläche 8, also in dieser bevorzugten Ausführungsform die Oberseite der Auflageplatte, mehrere Nuten 10 auf, die konzentrisch um die Achse 2 des Fräswerkzeugs 4 verlaufen. In diesen Nuten 10 werden Nutensteine geführt. In diese Nutensteine wiederum greifen Laschen 13 ein, an denen Drehgriffe 13b positioniert sind. Diese Laschen 13 mit den Drehgriffen 13b sind an den beiden Führungsprofilen 16 befestigt.

Durch Lösen der Drehgriffe 13b wird die Feststellung der Führungsprofile 16 relativ zum Maschinentisch mit der Auflageplatte und der Auflagefläche 8 gelöst und die Führungsprofile 16 können dann mitsamt den Laschen 13 und den Drehgriffen 13b sowie den Nutensteinen längs der kreisförmig verlaufenden Nuten 10 geführt werden. Da diese Nuten 10 konzentrisch zur Achse 2 des Fräswerkzeugs 4 verlaufen, bleiben die Führungsprofile 16 bei diesem Verdrehen im Wesentlichen auf die Achse 2 ausgerichtet

Die Führungsprofile 16 selbst ragen nicht bis unmittelbar an das Fräswerkzeug 4 heran und müssen auch nicht notwendig über die äußere Kante der Auflageplatten beziehungsweise der Auflagefäche 8 hinausragen. Die Führungsprofile zeigen in Figur 1 jeweils einen Lastarm 14, der in Richtung auf das Fräswerkzeug 4 zu ausgefahren werden kann sowie eine Profilverlängerung 18, mit der eine Verlängerung nach außen im Bedarfsfall hergestellt werden kann. Die Profilverlängerung 18 besitzt eine Auflageerweiterung 18c und eine Abstützung durch ein vertikales Rundrohr 18b.

Die Führungsprofile 16, der Lastarm 14 und die Profilverlängerung 18 bilden gemeinsam eine geradlinige Anlagekante 12.

Der Lastarm 14 kann gegen Herausgleiten gesichert und seine Schwer- bzw. Leichtgängigkeit einstellbar sein. An seinem zum Fräswerkzeug 4 gerichteten Stimende kann er eine auf den Benutzer hin gerichtete Zuführkrümmung 14a und eine Nase 14b aufweisen.

An der dem Fräskopf 4 zugewandten Lasche 13 ist außerdem ein Drehlager 13a angeordnet, das die Schwenkung für eine große Stützplatte 11b bereitstellt. An dem zum Fräskopf 4 ausgerichteten vorderen Ende des Führungsprofils 16 ist außerdem zur Auflage des Werkstückes 1 eine kleine Stützplatte 11a vorgesehen. Der Fräskopf 4 selbst besitzt wie schon aus Sicherheitsgründen üblich und vorgeschrieben eine Schutzhaube, die ihn während des Fräsvorganges von oben her weitgehend abdeckt. Diese Schutzhaube ist aber aus Gründen der klareren Darstellung in der Figur 1 weggelassen.

Der Zeichnung ist zu entnehmen, dass das Fräswerkzeug 4 gegen den Uhrzeigersinn aus Sicht des Betrachters dreht. Natürlich käme in der Praxis auch eine andere Drehrichtung in Betracht, hier ist zur Darstellung der Funktionsweise eine ausgewählt. Für diese Drehung ist nun der in der Darstellung linke Lastarm 14 relativ zum Führungsprofil 16 in Richtung des Fräswerkzeuges 4 vorgeschoben.

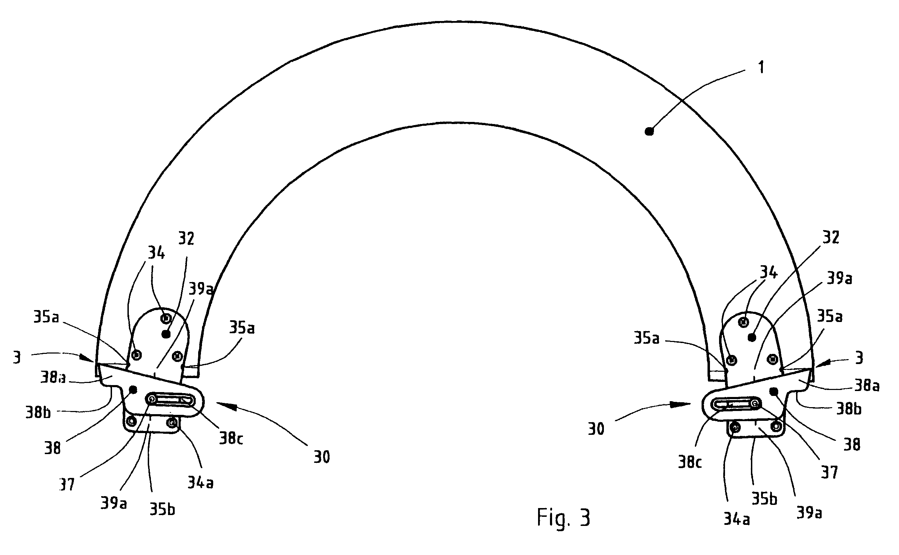

Es wird außerdem das Werkstück 1 vorbereitet. Zu diesem Zweck ist es auf seiner Unterseite an den Spannweitenpunkten 3mit Anführspitzen 38 versehen. Diese Anführspitzen 38 sind mit Werkstückführungen 30 am Werkstück 1 gehalten. Außerdem ist als Element zum Beabstandethalten von der Auflagefläche 8 noch eine Werkstückauflage 31 vorgesehen. Die Einzelheiten werden noch in Zusammenhang mit Figur 3 erläutert.

Es soll nunmehr die Ausfräsung eines Halbrundinnenbogens in dem Werkstück 1 erfolgen. Zu diesem Zweck führt der Benutzer das Werkstück 1, also das Bogenrohstück, mit auf der Unterseite positionierten Werkstückführungen 30 zum Anschrauben sowie der angeschraubten Werkstückauflage 31 gegen die Laufrichtung des Fräswerkzeuges 4. Dabei kommt eine Anführspitze 38 der linken Werkstückführung 30 mit einem Hebelkörper 20 an dem linken Lastarm 14 in Kontakt. Die rechte Anführspitze 38 der rechten Werkstückführung 30 gleitet an dem rechten Führungsprofil 16 beziehungsweise der Anlagekante 12 entlang.

Der Kontakt mit dem Hebelkörper 20 bewirkt mit seiner Vorschubkraft ein Zurückschieben des Lastarmes 14 in das Führungsprofil 16, wodurch der unmittelbare Bereich um den Fräskopf 4 herum frei wird. Nach der bereitgestellten Verschiebung gibt der Hebelkörper 20 automatisch den Weg für die an der Anlagekante 12 fortgleitende Anführspitze 38 frei. Auf diese Weise kann der Fräsvorgang fortschreiten und das Fräswerkzeug 4 weiter auf der Bogenlinie auf der Innenseite des Werkstücks 1 abrollen. Das über diese Kreisform hinausstehende Material des Werkstückes 1 wird zerspant und abgetragen.

Gegen Ende des Fräsvorganges kommt die Anführspitze 38 der rechten Werkstückführung 14 mit dem Hebelkörper 20 des rechten noch nicht ausgefahrenen Lastarms 14 in Kontakt. Dies führt dazu, dass dieser Lastarm 14 unterhalb des Fräswerkzeuges 4 in den unmittelbaren Fräskopfbereich vorgeschoben wird und der Fräsvorgang für den Innenbogen beendet wird.

Die bereits erwähnte Profilverlängerung 18 ist insbesondere für große Spannweitern vorgesehen. Sie verlängert insbesondere die Anlagekante 12. Sie kann auch eine Auflageerweiterung 18c aufweisen und mit entsprechenden Elementen 18a festgestellt werden. Mittels eines vertikalen Rundrohrs 18b kann sie gestützt werden. Die Ausrichtung der Höhe der Auflageerweiterung 18c kann stufenlos erfolgen.

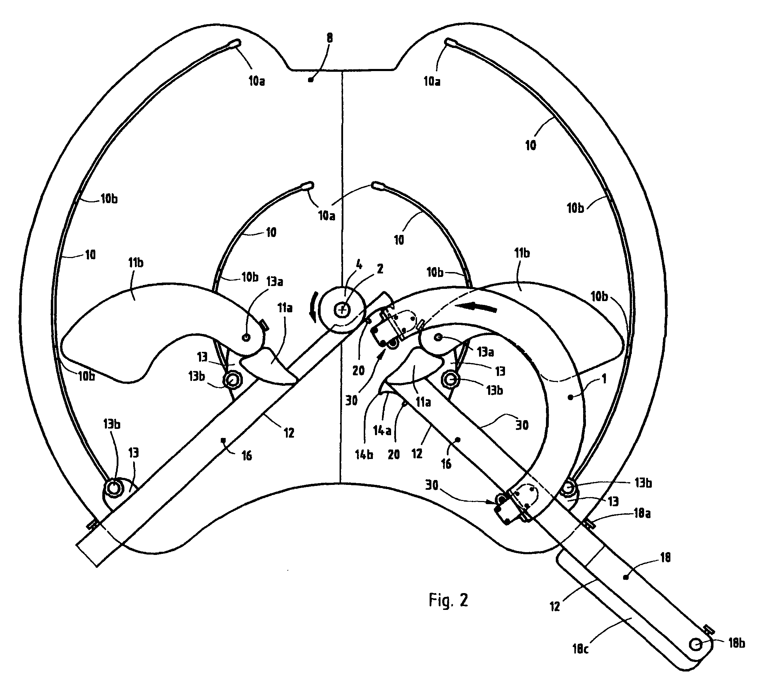

In der **Figur 2** ist nun dargestellt, wie mit der erfindungsgemäßen Vorrichtung an dem gleichen oder einem entsprechenden Werkstück 1 ein Außenbogen gefräst werden kann. Zu erkennen sind wiederum der Maschinentisch mit Auflageplatte und Auflagefläche 8, das Fräswerkzeug 4 mit seiner Achse 2, die Nuten 10, die konzentrisch um die Achse 2 herum auf der Auflagfläche 8 ausgebildet sind und die auf das Fräswerkzeug 4 zulaufenden Führungsprofile 16. Letztere sind allerdings in Verhältnis zur Figur 1 in einer anderen Stellung, nämlich auf den Benutzer zu in den Nuten 10 verschoben.

Das Werkstück 1 ist jetzt ebenfalls anders angeordnet, die Drehrichtung des Fräswerkzeuges 4 ist aber wiederum gegen den Uhrzeigersinn. Das Werkstück 1 ist jetzt mit seinem Außenbogen so angeordnet, dass dieser bei einer Bewegung nach links wiederum gegen die Drehrichtung des Fräswerkzeugs 4 geführt wird.

Anders als in der Figur 1 ist jetzt beim Ausfräsen der Außenbögen ein abzustützender Bereich des Werkstückes 1, also des Bogenrohstückes, hinter den Führungsprofilen 16 entstanden. Zur Bildung einer Auflagefläche sind hierzu zwei Stützplatten 11a und 11b vorgesehen. Diese waren auch bereits in der Figur 1 dargestellt, dort allerdings noch ohne Funktion. Die Stützplatten sind jeweils paarweise auf der linken und rechten Seite angeordnet, da allen Drehrichtungen des Fräswerkzeuges 4 und Formen der Werkstücke 1 auf diese Weise entsprochen werden kann.

Die Nuten 10 können an ihren benutzerabgewandten Seiten Freifräsungen 10a enthalten, die das Einführen des Nutensteines vereinfachen. Der Maschinentisch 8 kann im Bereich der Nuten 10 Durchfräsungen 10b besitzen. Diese Durchfräsungen 10b erleichtern das Säubern von Späneansammlungen.

In der **Figur 3** ist ein Werkstück 1 dargestellt, wie es zum Fräsen eines Außenbogens vorbereitet ist. Zu diesem Zweck werden Werkstückführungen 30 zum Anschrauben positioniert, und zwar an jedem Ende 3 des Werkstückes 1 eine Werkstückführung 30. Die Werkstückführung 30 besitzt jeweils links und rechts ausgebildete Grundplatten 32 mit Kerben 35a. Diese Kerben 35a sind jeweils auf einer Linie angeordnet. Auf den Grundplatten 32 ist jeweils eine Anführspitze 38 montiert. Die Anführspitze 38 ist in Richtung des Mittelpunktes des zu fräsenden Bogens stufenlos verstellbar. Dies wird durch die Kerben 35a erleichtert.

Die Grundplatten 32 besitzen außerdem Senkungen 34a, die mittels Schrauben 34 eine kraftschlüssige Verbindung mit dem Werkstück 1 ermöglichen.

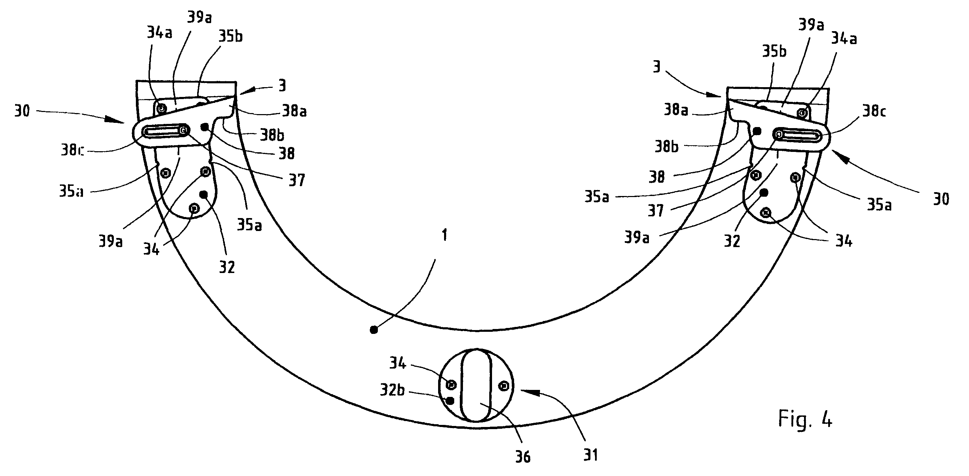

In **Figur 4** ist das gleiche Werkstück wie in Figur 3 dargestellt, diesmal vorbereitet zum Fräsen eines Innenbogens. Die gleichen Werkstückführungen 30 zum Anschrauben werden erneut eingesetzt, diesmal aber anders positioniert. Außerdem ist hier zusätzlich zu Figur 3 eine Werkstückauflage 31 vorgesehen.

Die Werkstückauflage 31 stützt das Werkstück 1, da dieses beim Fräsen des Innenbogens vor den Führungsprofilen 16 geführt wird und daher nicht auf den Stützplatten 11a, 11b (siehe Figur 2) aufliegt.

Von Vorteil ist es, wenn die Stützhöhe der Werkstückführung 30 und die der Werkstückauflage 31 gleichhoch ist und darüber hinaus mit der Stützhöhe der Stützplatten 11a, 11b identisch ist.

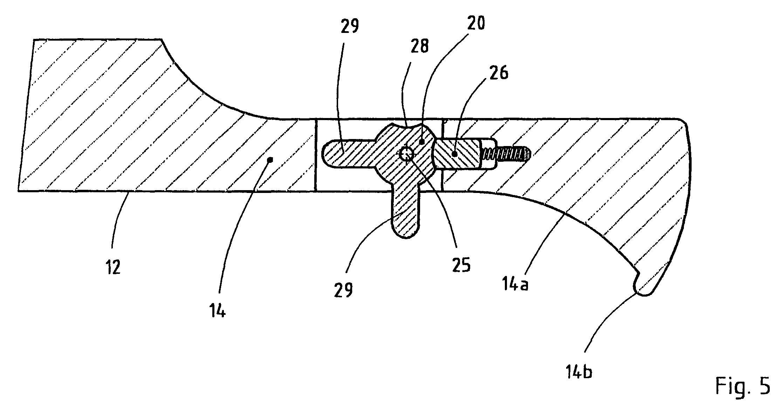

**Figur 5** zeigt einen Schnitt durch den vorderen Teil des linken Lastarmes 14. Dieser besitzt eine auslaufende Zuführkrümmung 14a und eine Nase 14b. Die Nase 14b stellt dabei eine Sicherheitsabstoppung bereit, um ein Abrutschen der Anführspitzen 38a von der vertikalen Anlagekante 12 zu verhindern. Zu erkennen ist in der Figur 5 ferner der Hebelkörper 20. Dieser besitzt eine Achse und einen mit einer Druckfeder gespannten Bolzen 26. Im Zentrum des Hebelkörpers 20 ist eine Achsenbohrung 25 vorgesehen. Am Hebelkörper 20 sind ferner zwei Hebelarme 29 angeordnet, die im rechten Winkel zueinander stehen, also in einer 90 °-Stellung. Der Scheitelpunkt dieses Winkels liegt im Zentrum der Achsbohrung 25.

An der gegenüberliegenden Seite der Hebelarme 29 ist je eine Aussparung 28 vorgesehen, die das stirnseitige Bolzenprofil aufnimmt. Die Hebelarme 29 dienen insbesondere dazu, die Verschiebung der Lastarme 14 als Mitnehmerwirkung bereitzustellen. Sie geben nach bereitgestellter Verschiebung die Kontaktzone mit der Anführspitze 38a frei.

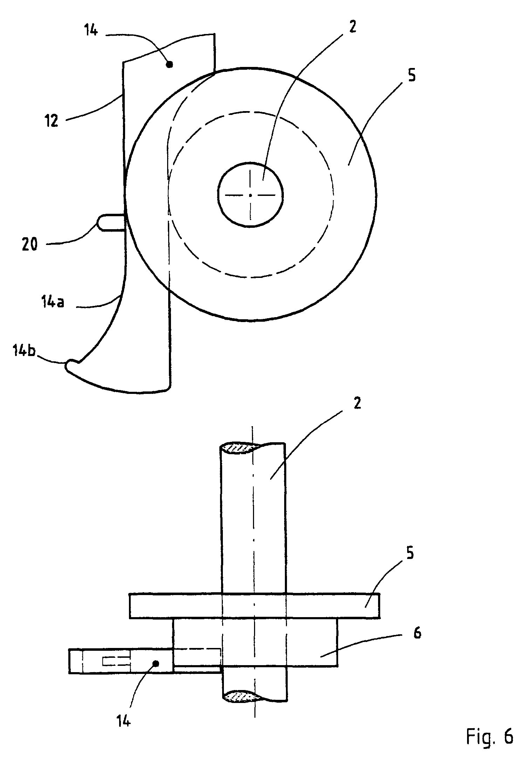

In der **Figur 6** sind zwei kreisrunde Einstellscheiben 5 und 6 näher dargestellt. Diese sind mit einer passigen Bohrung auf den leeren Fräsdorn des Fräswerkzeugs 4 aufgesetzt. Die kleinere der beiden Einstellscheiben 6 stellt einen Anschlag für das vordere Ende des Lastarmes 14 bereit. Dabei ist der Radius der großen Einstellscheibe 5 so gewählt, dass er um das Breitenmaß des Lastarmes 14, das dieser im Bereich des Hebelkörpers 20 besitzt, größer ist als der Radius der kleinen Einstellscheibe 6.

Dadurch bildet sich beim Heranschwenken des Lastarmes 14 an die kleine Einstellscheibe 6 automatisch eine Tangente zur Anlagekante 12 mit der darüberliegenden großen Einstellscheibe 5.

Der Außendurchmesser der großen Einstellscheibe 5 richtet sich beispielsweise nach einem Normdurchmesser der Fräsköpfe des Fräswerkzeugs 4 oder auch nach einem speziellen gewünschten Durchmesser.

Beim Einstellen der Führungsprofile 16 auf den einzustellenden Radius hin erfolgt durch Heranschwenkung der Lastarme 14 an die kleine Einstellscheibe 6 stets eine Ausrichtung auf den Außenumfang der großen Einstellscheibe 5 und somit auch auf den Schneidenflugkreis des Fräswerkzeuges 4.

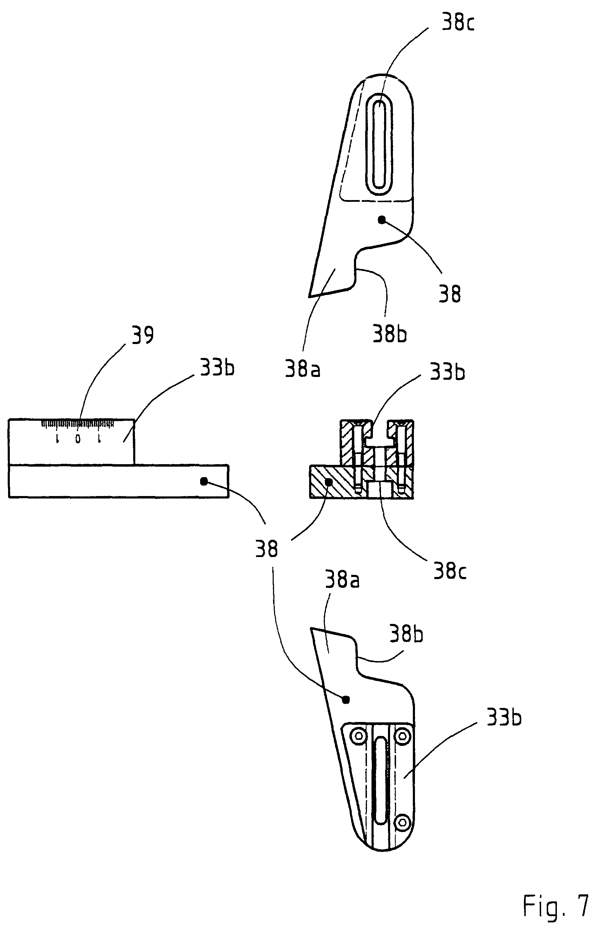

In **Figur 7** ist eine Anführspitze 38 näher dargestellt. Diese weist eine Spitze 38a, eine Ausklinkung 38b und ein gesenktes Langloch 38c auf. An der Anführspitze 38 ist ferner eine Führungsaufnahme 33b mit einer Skala 39 angeordnet, die eine Führung an den Grundplatten 32 und 42 der Werkstückführungen 30 und 40 bereitstellt.

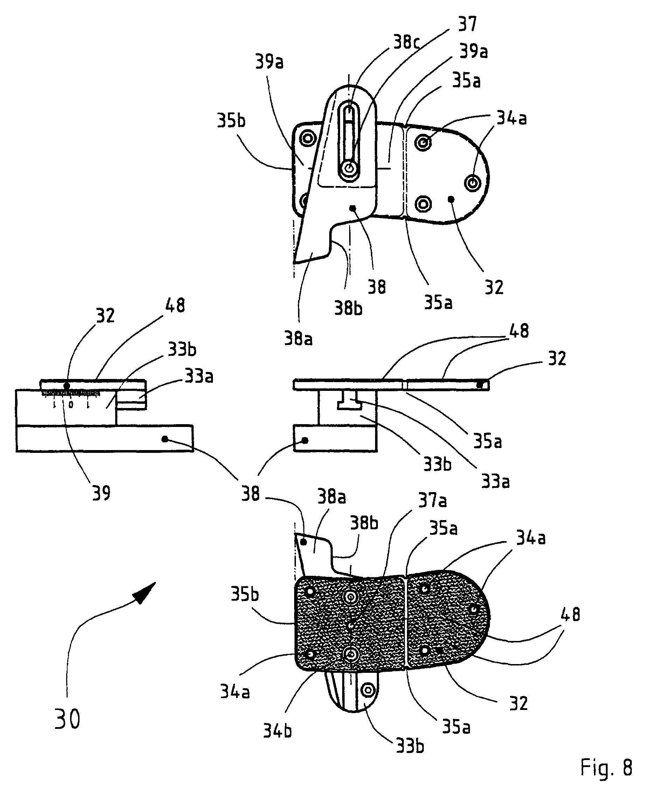

**Figur 8** zeigt eine komplette Werkstückführung 30 zum Anschrauben. Diese weist die Anführspitze 38 und eine mit dem Werkstück 1, also dem Bogenrohstück vorübergehend fest verbindbare Grundplatte 32 auf. Auf der Grundplatte 32 sind Senkungen 34a und 34b angeordnet. Eine kraftschlüssige Verbindung mittels Schrauben kann so an der Unterseite des Bogenrohstücks beziehungsweise Werkstücks 1 erfolgen.

Die mit dem Werkstück 1 kontaktierende Seite ist mit einem haftenden Belag 48, insbesondere einem Schleifpapierhaftbelag, versehen. Dieser wirkt einer Verdrehung der Grundplatte 32 entgegen.

Im Bereich der Kerben 35a, die an den Kanten der Grundpatte 32 eingearbeitet sind, ist der Belag 48 ausgespart. Dadurch entsteht eine Freifläche, die eine Fluchtlinie zu den Kerben 35a vorgibt.

An der dem Werkstück 1 gegenüberliegenden Seite der Grundplatte 32 ist ein Führungsprofil 33a angeordnet, das mit der Führungsaufnahme 33b eine Verschiebung der Anführspitze 38 an der Grundplatte 32 bereitstellt. Die Skala 39 an der Führungsaufnahme 33b (siehe auch Figur 7) ermöglicht eine Ablesung der Verschiebung mit Hilfe der Nulllinie 39a an der Grundplatte 32.

Eine stufenlose Verschiebung der Anführspitze 38 erfolgt durch das gesenkte Langloch 38c. Die Feststellung erfolgt mittels einer Innensechskantschraube 37, wofür die Grundplatte 32 ein Gewinde 37a aufweist. Die Kerben 35a und die Kante 35b sind zu der Mittellinie des gesenkten Langloches 38c parallel und in einem gleichen bestimmten Abstand angeordnet. Auf diese Weise fluchtet die Spitze 38a der Anführspitze 38 auf der Kante 35b oder nach dem Umdrehen der Anführspitze 38 in der Mitte der Kerben 35a.

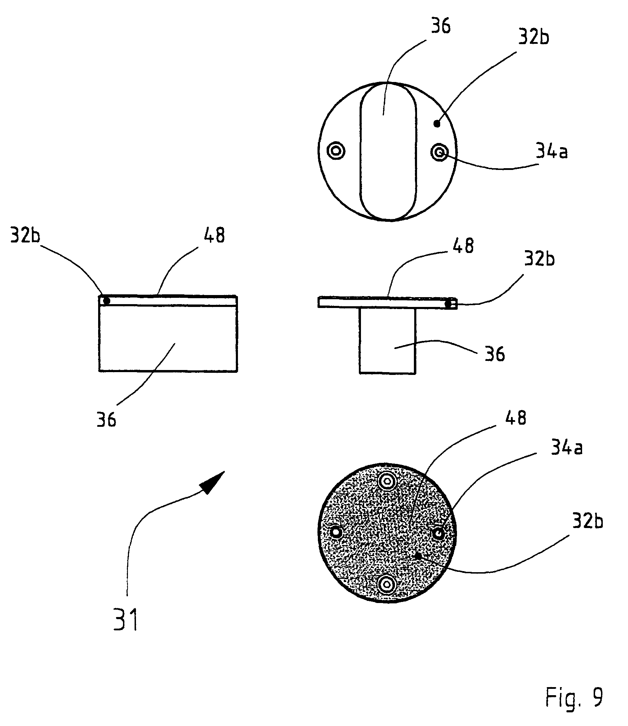

**Figur 9** zeigt eine Werkstückauflage 31 zum anschrauben. Sie besitzt eine kreisrunde Grundplatte 32b und ein Stützteil 36 und stellt die Werkstückauflage des Werkstückes 1 beim Fräsen eines Innenbogens bereit. Durch Senkungen 34a erfolgt die vorübergehend kraftschlüssige Verbindung durch Schrauben auf der Unterseite des Werkstückes 1. Die mit dem Werkstück 1 kontaktierende Fläche der Grundplatte 32b ist auch in diesem Falle mit einem Belag 48, insbesondere einem Schleifpapierhaftbelag, versehen.

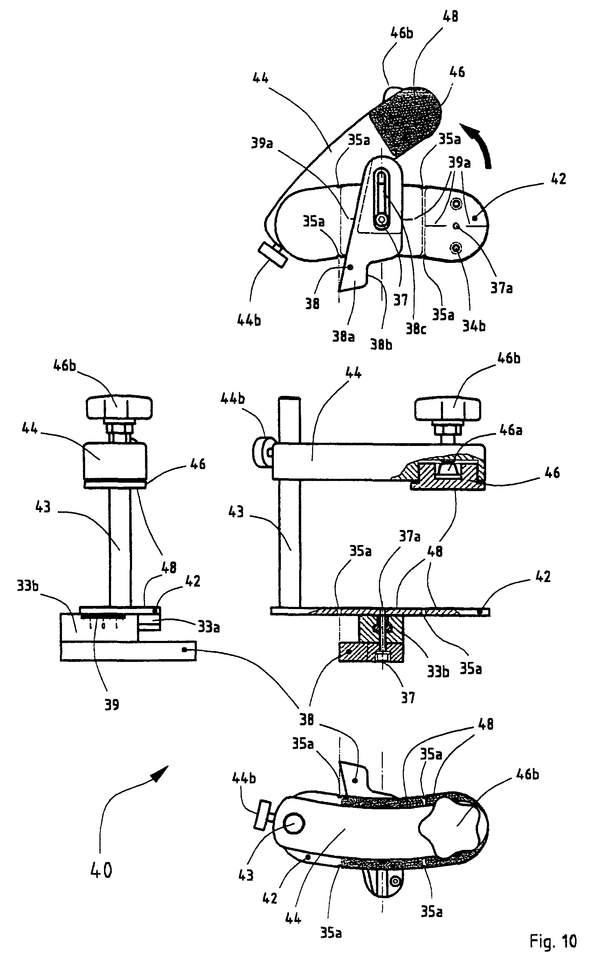

Die **Figur 10** stellt Werkstückführungen 40 zum Spannen dar. Eine Anführspitze 38 ist an einer bogenförmigen Grundplatte 42 vorgesehen. Auf der Grundplatte 42 ist eine runde vertikale Säule 43 angeordnet. Diese führt einen bogenförmigen Tragarm 44. Der bogenförmige Tragarm 44 ist feststellbar (44b) und stufenlos höhenverstellbar. In dem Tragarm 44 ist eine drehbar gelagerte vertikale Andruckspindel 46a angeordnet, die einen Andruckstempel 46 mittels eines Drehgriffes 46b oder mittels eines Klemmhebels oder auch mittels eines Exzenterspanners oder mittels eines Kniehebelspanners betätigt.

Die das Werkstück 1 kontaktierenden Flächen der Grundplatte 42 und des Andruckstempels 46 sind auch hier bevorzugt mit einem Schleifpapierhaftbelag versehen, wodurch eine verdrehsichere Pressung auf dem Werkstück erfolgt.

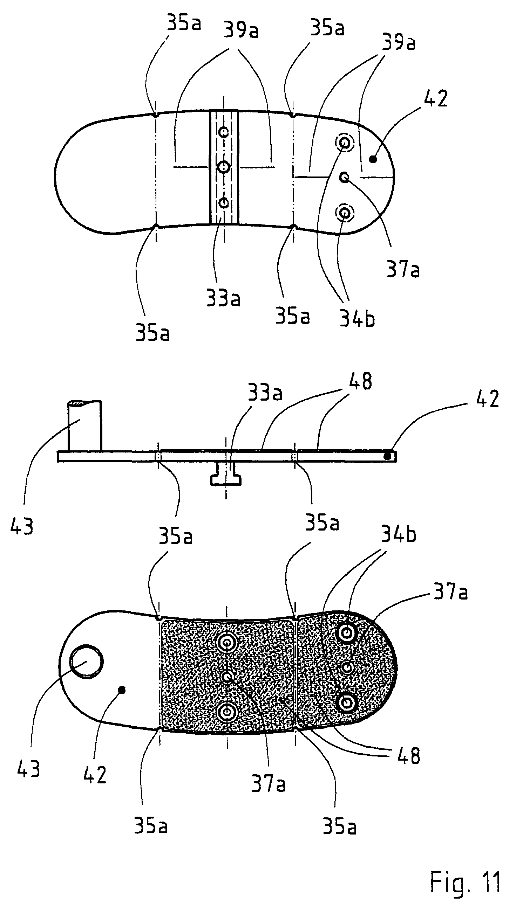

In der **Figur 11** ist eine Grundplatte 42 ohne Anbauteile zum besseren Verständnis in drei unterschiedlichen Ansichten dargestellt. An der Mittellinie einer bogenförmigen Grundplatte 42 ist ein Führungsprofil 33a angeordnet. In einem parallelen und gleichen Abstand zu der Mittellinie an den Kanten der bogenförmigen Grundplatte 42 sind mindestens je zwei gegenüberliegende Kerben 35a eingearbeitet. Diese Kerben 35a sind so positioniert, dass die Spitze 38a der Anführspitze 38 in der Mitte der Kerben 35a fluchtet.

Auf der Unterseite der Grundplatte 42 ist das Führungsprofil 33a angeordnet, wobei links und rechts davon im Bereich der Gewinde 37a Nulllinien 39a für die ablesbare Gestaltung der Skala 39 vorgesehen sind.

Für die Versetzung des Führungsprofils 33a sind auf der Grundplatte 42 weitere Gewinde 37a und weitere Senkungen 34b vorgesehen.

Auch hier ist die Oberseite der Grundplatte 42 mit einem Belag 48, insbesondere einem Schleifpapierhaftbelag, versehen, der im Bereich der Kerben 35a unterbrochen ist. Die entstehende Freifläche gibt wiederum eine Fluchtlinie zu den Kerben vor.

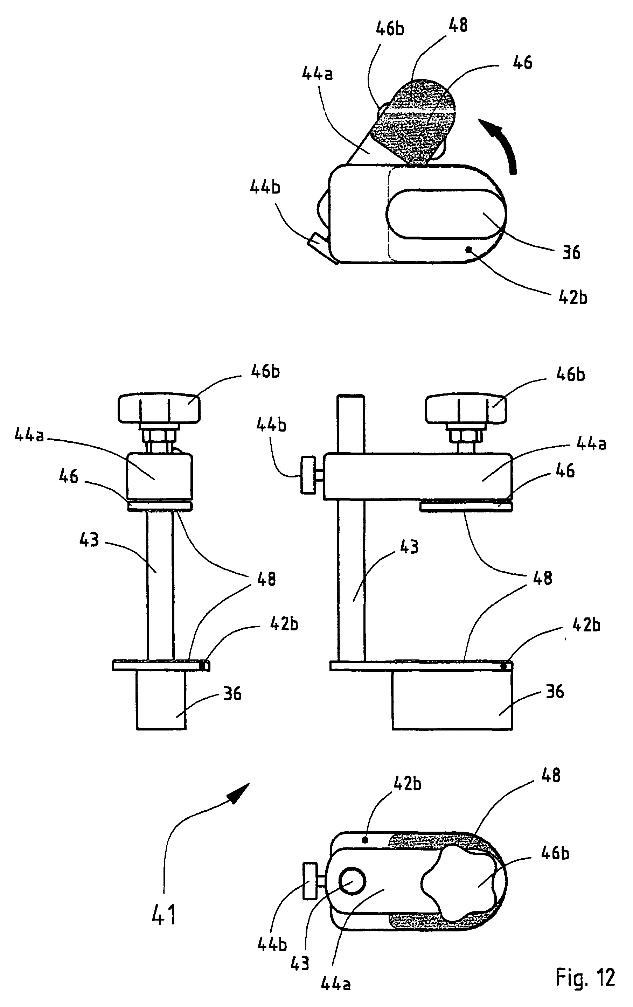

In **Figur 12** ist eine Werkstückauflage 41 zum Spannen dargestellt. Hier ist eine Grundplatte 42b mit einem Stützteil 36 vorgesehen. Eine auf der Oberseite der Grundplatte 42b angeordnete runde vertikale Säule 43 führt einen Tragarm 44a, der feststellbar 44b ist. In dem Tragarm 44a ist eine Andruckspindel vertikal und drehbar angeordnet, wodurch ein Andruckstempel 46 vorzugsweise durch einen Drehgriff betätigbar wird.

Dieses Werkstück 1 berührende Flächen sind mit einem Schleifpapierhaftbelag behaftet und sollen so eine Verdrehsicherung beim Pressen des Werkstückes herbeiführen.

### Bezugszeichenliste

- 1: Werkstück beziehungsweise Bogenrohstück
- 2: Achse des Fräswerkzeugs
- 3: Spannweitenpunkte
- 4: Fräswerkzeug
- 5: Einstellscheibe
- 6: Einstellscheibe
- 8: Auflagefläche

- 10: Nuten
- 10a: Freifräsung
- 10b: Durchfräsungen
- 11a: kleine Stützplatte
- 11b: große Stützplatte
- 12: Anlagekante
- 13: Laschen
- 13a: Drehlager
- 13b: Drehgriffe
- 14: Lastarm
- 14a: Zuführkrümmung
- 14b: Nase
- 16: Führungsprofile
- 18: Profilverlängerung
- 18a: Feststellung der Profilverlängerung
- 18b: vertikale Säule
- 18c: Auflageerweiterung

- 20: Hebelkörper
- 25: Achsbohrung
- 26: Bolzen
- 28: Aussparung
- 29: Hebelarm

- 30: Werkstückführung
- 31: Werkstückauflage
- 32: Grundplatte
- 33a: Führungsprofil
- 33b: Führungsaufnahme
- 34: Schraube
- 34a: Senkung
- 34b: weitere Senkung
- 35a: Kerbe
- 35b: Kante
- 36: Stützteil
- 37: Innensechskantschraube
- 37a: Gewinde
- 37a: weiteres Gewinde
- 38: Anführspitze
- 38a: Spitze der Anführspitze
- 38b: Ausklinkung
- 38c: Langloch
- 39: Skala
- 39a: Nulllinien

- 40: Werkstückführung
- 41: Werkstückauflage
- 42: Grundplatte
- 42b: Grundplatte
- 43: vertikale Säule
- 44: Tragarm
- 44b: Feststellelement
- 46: Andruckstempel
- 46a: Andruckspindel
- 46b: Drehgriff
- 48: Schleifpapierhaftbelag

## Patentansprüche

1. Vorrichtung zur Herstellung von Rund- und Segmentbögen an Werkstücken, mit einer Werkstückmaterial entfernenden, stationär angeordneten Einrichtung,
**bei der** ein Maschinentisch mit einer Auflagefläche (8) vorgesehen ist, **bei der** zwei Führungsprofile (16) vorgesehen sind, die jeweils eine im Wesentlichen geradlinige Anlagekante (12) bilden,
**bei der** die beiden Anlagekanten (12) während des Bearbeitungsvorganges miteinander einen Winkel einschließen, an dessen Scheitelpunkt die Werkstückmaterial entfernende Einrichtung z.B. Fräswerkzeug (4) angeordnet ist,
**bei der** die Führungsprofile (16) um den Scheitelpunkt verschwenkbar und feststellbar sind, und
**bei der** Anführspitzen (38) vorgesehen sind, die an dem Werkstück (1) an jeweils zwei Spannweitenpunkten (3) des herzustellenden Rundbeziehungsweise Segmentbogens angeordnet sind und von denen sich je eine während des Bearbeitungsvorganges gegen je eine der beiden Anlagekanten (12) abstützen,
**dadurch gekennzeichnet,**
**dass** Einrichtungen (11, 13, 30, 31, 40, 41) vorgesehen sind, die das Werkstück (1) in einer vorbestimmten, in konstantem Abstand zur Auflagefläche (8) des Maschinentisches befindlichen Ebene halten,
**und dass** die beiden Führungsprofile (16) in einer Ebene unterhalb der Ebene des Werkstückes (1) oberhalb der Auflagefläche (8) des Maschinentisches angeordnet sind.

2. Vorrichtung nach Anspruch 1,
**dadurch gekennzeichnet,**
**dass** die Auflagefläche (8) des Maschinentisches durch eine oder mehrere Auflageplatten gebildet wird.

3. Vorrichtung nach Anspruch 1 oder 2,
**dadurch gekennzeichnet,**
**dass** in der Auflagefläche konzentrisch zum Scheitelpunkt Nuten (10) vorgesehen sind, in welchen Nutensteine laufen,
**dass** an den Führungsprofilen (16) Elemente z.B. Laschen (13) angeordnet sind, und
**dass** eine Feststellbarkeit der Nutensteine vorgesehen ist.

4. Vorrichtung nach einem der vorstehenden Ansprüche,
**dadurch gekennzeichnet,**
**dass** die Führungsprofile (16) jeweils einen Lastarm (14) besitzen, der in Längsrichtung zur vorderen Anlagekante (12) fluchtend ausfahrbar ausgebildet ist.

5. Vorrichtung nach einem der vorstehenden Ansprüche,
**dadurch gekennzeichnet,**
**dass** der Lastarm (14) gegen Herausgleiten gesichert und/oder eine Einstellbarkeit der Schwer- beziehungsweise Leichtgängigkeit vorgesehen ist.

6. Vorrichtung nach Anspruch 4 oder Anspruch 5,
**dadurch gekennzeichnet,**
**dass** der Lastarm (14) an seinem zum Scheitelpunkt gerichteten Ende eine zur Benutzerseite gerichtete Zuführkrümmung (14a) und/oder eine Nase (14b) aufweist.

7. Vorrichtung nach einem der Ansprüche 4 bis 6,
**dadurch gekennzeichnet,**
**dass** der Lastarm (14) einen Hebelkörper (20) aufweist, der bei Kontaktierung durch eine der Anführungsspitzen (38) die Längsverschiebbarkeit des Lastarmes (14) bereitstellt und die Kontaktzone nach der Zusammenschiebung des Lastarmes (14) in das Führungsprofil (16) freigibt.

8. Vorrichtung nach Anspruch 7,
**dadurch gekennzeichnet,**
**dass** der Hebelkörper (20) aus einem mit einer Druckfeder gespannten Bolzen (26) sowie aus einer im Zentrum des Hebelkörpers (20) angeordneten Achsbohrung (25) besteht, wobei der Hebelkörper (20) zwei Hebelarme (29) aufweist, die in einer Stellung von etwa 90 ° zueinander stehen, wobei der Scheitelpunkt des Winkels im Zentrum der Achsbohrung liegt und auf der gegenüberliegenden Seite der Hebelarme (29) je eine bogenförmige hohle Ausarbeitung (28) vorgesehen ist, die die bogenförmige runde Stirnseite des Bolzens (26) aufnimmt.

9. Vorrichtung nach einem der vorstehenden Ansprüche,
**dadurch gekennzeichnet,**
**dass** das Führungsprofil (16) an der der Achse (2) des Fräswerkzeugs (4) abgewandten Seite eine Profilverlängerung (18) aufweist, die zur Anlagekante (12) fluchtet.

10. Vorrichtung nach Anspruch 9,
**dadurch gekennzeichnet,**
**dass** die Profilverlängerung (18) eine Auflageerweiterung (18c) aufweist, die feststellbar und abgestützt ist.

11. Vorrichtung nach einem der vorstehenden Ansprüche,
**dadurch gekennzeichnet,**
**dass** die Auflageplatten des Maschinentisches außen runde oder abgerundete Kanten besitzt.

12. Vorrichtung nach einem der vorstehenden Ansprüche,
**dadurch gekennzeichnet,**
**dass** zwei kreisrunde Einstellscheiben (5, 6) mit unterschiedlicher Größe des Außenradius' mit je einer mittigen Bohrung vorgesehen sind, wobei die Bohrung auf die leere Fräskopfachse (2) aufsetzbar gestaltet ist, wobei der Außenradius der größeren Einstellscheibe (5) um das Breitenmaß des Lastarmes (14), dass dieser im Bereich des Hebelkörpers (20) hat, größer ist als der Außenradius der kleinen Einstellscheibe (6) und dass der Lastarm mit seiner der Fräskopfachse gegenüberliegenden Seite vorderen Kante mit der großen Einstellscheibe in einer tangentialen Ebene liegt.

13. Vorrichtung nach einem der vorstehenden Ansprüche,
**dadurch gekennzeichnet,**
**dass** Werkstückführungen (30) zum Anschrauben an das Bogenrohstück, und Werkstückführungen (40) zum Spannen an das Bogenrohstück vorgesehen sind, die je links und rechts ausgebildet sind und aus mit dem Bogenrohstück vorübergehend fest verbindbaren Grundplatten (32, 42) bestehen, an dem stufenlos verstellbare, feststellbare, ausrückbare und fein einstellbare Anführspitzen (38) angeordnet sind, die auf der Unterseite des Bogenrohstückes angeordnet sind und an der Anlagekante (12) der Führungsprofile (16); des Lastarmes (14) und der Profilverlängerung (18) entlang gleiten.

14. Vorrichtung nach Anspruch 13,
**dadurch gekennzeichnet,**
**dass** die Werkstückführungen zum Spannen (40) aus einer bogenförmigen Grundplatte (42) mit einer vertikal angeordneten runden Säule (43) bestehen, an dem ein bogenförmiger Tragarm (44) mit einer integrierten vertikalen drehbar gelagerten Andruckspindel (46a), die über einen Drehgriff (46b), oder über einen Klemmhebel, oder über ein Exenterspanner, oder über einen Kniehebelspanner einen Andruckstempel (46) betätigt, wobei der Tragarm (44) stufenlos höhenverstellbar und feststellbar (44b) an der runden Säule (43) geführt ist.

15. Vorrichtung nach Anspruch 13 oder 14,
**dadurch gekennzeichnet,**
**dass** die Werkstückführungen zum Anschrauben (30) aus einer bogenförmigen Grundplatte (32) bestehen, die Senkungen (34a) enthält, wodurch eine kraftschlüssige Verbindung durch Schrauben (34) auf der Unterseite des Werkstückes erfolgen kann.

16. Vorrichtung nach einem der Ansprüche 13 bis 15,
**dadurch gekennzeichnet,**
**dass** die Grundplatten (32, 42) der Werkstückführungen (30, 40) und die Grundplatten (32b, 42b) der Werkstückauflagen (31, 41) sowie die Andruckstempel (46) auf ihren die Werkstückseite kontaktierenden Flächen mit haftendem Belag, insbesondere aus Schleifpapier (48) versehen sind und dass die Grundplatten (32, 42) auf dem der Werkstückseite gegenüberliegenden Seiten Senkungen (34b) für je ein Führungsprofil (33a) aufweisen und dass auf dieser Seite in einem Winkel von etwa 90° Nulllinien (39a) vorgesehen sind, die eine ablesbare Gestaltung für eine Skala (39) bereitstellen.

17. Vorrichtung nach einem der Ansprüche 13 bis 16,
**dadurch gekennzeichnet,**
**dass** an den Kanten der Grundplatten (32, 42) parallel zur Mittellinie des Führungsprofils (33a) je links und rechts davon und im gleichen Abstand, mindestens zwei sich gegenüberliegende Kerben (35a) eingearbeitet sind, oder dass auf der einen Seite der Mittellinie eine Kante (35b) angeordnet ist, so dass die Spitze (38a) der Anführspitze (38) in der Mitte der Kerben (35a) oder auf der Kante (35b) fluchtet.

18. Vorrichtung nach Anspruch 17,
**dadurch gekennzeichnet,**
**dass** die die Werkstückseiten kontaktierenden mit Schleifpapier behafteten Flächen der Grundplatten (32, 42) im Bereich der Kerben ausgespart sind.

19. Vorrichtung nach einem der Ansprüche 13 bis 18,
**dadurch gekennzeichnet,**
**dass** spiegelbildlich ausgebildete Anführspitzen (38) vorgesehen sind; die aus je einer Spitze (38a) mit einer Ausklinkung (38b), aus je einem gesenkten Langloch (36) und aus je einer Führungsaufnahme (33b) bestehen, die in dem Führungsprofil (33a) geführt werden und dass an der Führungsaufnahme (33b) eine Skala (39) angeordnet ist, die die Verschiebung der Anführspitzen (38) zu den Nulllinien (39a) der Grundplatten (32, 42) ablesbar gestaltet und dass in dem gesenkten Langloch (36) eine Schraube (37) vorgesehen ist, die eine Befestigung der Anführspitze (38) in den Gewinden (37a) der Grundplatten (32, 42) bereitstellt.

20. Vorrichtung nach einem der Ansprüche 13 bis 19,
**dadurch gekennzeichnet,**
**dass** beim Fräsen von Innenbögen an dem Bogenrohstück mindestens eine zu befestigende Werkstückauflage (31) zum Anschrauben, oder alternativ mindestens eine Werkstückauflage (41) zum Spannen vorgesehen sind, wobei die Werkstückauflage (41) zum Spannen aus einer auf einer kreisrunden Grundplatte (42b) angeordneten vertikalen runden Säule (43) und einem darauf geführten stufenlos höhenverstellbaren und feststellbaren (44a) Tragarm (44) mit einer integrierten vertikalen drehbar gelagerten Andruckspindel (46a), die über einen Drehgriff (46b) oder über einen Klemmhebel, oder über einen Exenterspanner, oder über einen Kniehebelspanner einen Andruckstempel (46) betätigt, wobei der Tragarm (44) an der runden Säule (43) geführt ist, und dass ein Stützteil (36) vorgesehen ist, und beide Werkstückauflagen (31, 41) mit ihrer vertikalen Stützhöhe, mit der Stützhöhe der Werkstückführungen (30, 40) auf der gleichen Werkstückebene liegen.

21. Vorrichtung nach einem der vorstehenden Ansprüche,
**dadurch gekennzeichnet,**
**dass** zum Fräsen von Außenbögen Stützplatten vorgesehen sind, die aus einer kleinen Stützplatte (11a) und einer großen Stützplatte (11b) bestehen, und in einer zur Maschinentischebene parallelen Ebene angeordnet sind und auf ihrer Oberseite eine Auflagefläche für das Bogenrohstück bereitstellen und dass auf deren Unterseite Stützfüße angeordnet sind, so dass die vertikale Stützhöhe der Stützplatten (11a, 11b) mit der Stützhöhe der Werkstückauflagen (31, 41) und der Stützhöhe der Werkstückführungen (30, 40) auf der gleichen Werkstückebene liegen.

22. Vorrichtung nach einem der vorstehenden Ansprüche,
**dadurch gekennzeichnet,**
**dass** die an dem Führungsprofil (16) angeordneten vorderen dem Fräskopf zugewandten Laschen (13), je ein Drehlager (13a) aufweisen, in dem die große Stützplatte (11b) drehbar, feststellbar und abnehmbar gelagert ist, und dass die vorderen Laschen (13) je ein Gewinde enthalten, an denen die kleinen Stützplatten (11a) mit ihren Stützfüßen anschraubbar angeordnet sind.

## Claims

1. A device for producing semi-circular and segmental arches on work pieces including a statically-positioned implement for removing material from the work pieces,
**wherein** there is provided a machining table having a supporting surface (8),
**wherein** there are provided two guide profiles (16) each of which forms a substantially straight bearing edge (12),
**wherein**, during the working process, the two bearing edges (12) include an angle therebetween at the vertex whereof the implement for removing material from the work pieces e.g. a milling tool (4) is arranged,
**wherein** the guide profiles (16) are pivotal about the vertex and are lockable, and
**wherein** there are provided respective head centring means (38) which are arranged on the work piece (1) at the two span points (3) of the semi-circular or segmental arch that is to be produced and each of which is supported against a respective one of the two bearing edges (12) during the working process,
**characterised**
**in that** there are provided implements (11, 13, 30, 31, 40, 41) which hold the work piece (1) in a predetermined plane that is located at a constant distance from the supporting surface (8) of the machining table,
**and in that** the two guide profiles (16) are arranged in a plane which is below the plane of the work piece (1) and above the supporting surface (8) of the machining table.

2. A device in accordance with Claim 1,
**characterised**
**in that** the supporting surface (8) of the machining table is formed by one or more supporting plates.

3. A device in accordance with Claim 1 or 2,
**characterised**
**in that** grooves (10), which are concentric relative to the vertex and in which slide blocks run, are provided in the supporting surface,
**in that** elements e.g. brackets (13) are arranged on the guide profiles (16), and
**in that** a locking means is provided for the slide blocks.

4. A device in accordance with any of the preceding Claims,
**characterised in that**
the guide profiles (16) each have a load arm (14) which is adapted to be driven out in the longitudinal direction so as to be flush with the front bearing edge (12).

5. A device in accordance with any of the preceding Claims,
**characterised in that**
the load arm (14) is prevented from sliding out and/or means are provided for adjusting the difficult or easy accessibility thereof.

6. A device in accordance with Claim 4 or Claim 5,
**characterised in that**
the end of the load arm (14) directed towards the vertex is provided with a transitional curvature (14a) directed towards the user and/or a nose (14b).

7. A device in accordance with any of the Claims 4 to 6,
**characterised in that**
the load arm (14) comprises a lever body (20) which enables the load arm (14) to be displaced longitudinally when contacted by one of the head centring means (38) and to open up the contact zone when the load arm (14) has been pushed into the guide profile (16).

8. A device in accordance with Claim 7,
**characterised in that**
the lever body (20) consists of a stud (26) tensioned by a compression spring and also an axial boring (25) arranged in the centre of the lever body (20), wherein the lever body (20) comprises two lever arms (29) which are disposed at an angle of approximately 90° relative to one another, wherein the vertex of the angle lies in the centre of the axial boring and there is provided on the opposite sides of the lever arms (29) a respective curved hollow recess (28) which accommodates the curved round end face of the stud (26).

9. A device in accordance with any of the preceding Claims,
**characterised in that**
the guide profile (16) comprises an extension (18) of the profile at the side thereof remote from the axis (2) of the milling tool (4), said extension being flush with the bearing edge (12).

10. A device in accordance with Claim 9,
**characterised in that**
the extension (18) of the profile comprises a support-widening section (18c) which is lockable and supported.

11. A device in accordance with any of the preceding Claims,
**characterised in that**
the supporting plates of the machining table possess outwardly round or rounded edges.

12. A device in accordance with any of the preceding Claims,
**characterised in that**
there are provided two circular adjusting discs (5, 6) having different sizes of outer radius and each having a central boring, wherein the boring is such that it is adapted to be placed on the empty milling head axis (2), wherein the outer radius of the larger adjusting disc (5) is greater than the outer radius of the small adjusting disc (6) by an amount equivalent to the width of the load arm (14) in the vicinity of the lever body (20), and **in that** the front side edge of the load arm opposite the axis of the milling head and the larger adjusting disc lie in a tangential plane.

13. A device in accordance with any of the preceding Claims,
**characterised in that**
there are provided work piece guides (30) that are adapted to be fastened to the rough curved member by screws, and work piece guides (40) that are adapted to be clamped to the rough curved member, said guides each being of left and right form and each consisting of base plates (32, 42) which are adapted to be temporarily but firmly connected to the rough curved member and upon which there are arranged continuously displaceable, adjustable, reversible and finely adjustable head centring means (38) that are arranged on the lower face of the rough curved member and slide along on the bearing edge (12) of the guide profile (16); of the load arm (14) and of the extension of the profile (18).

14. A device in accordance with Claim 13,
**characterised in that**
the work piece guides of the clamp-fastening type (40) consist of a curved base plate (42) having a vertically arranged round column (43) upon which there is a curved support arm (44) having an integrated, vertical, rotatably mounted pressing spindle (46a) which actuates a pressing plunger (46) by means of a turning handle (46b), or by means of a clamping lever, or by means of an eccentric jack, or by means of a toggle action jack, wherein the support arm (44) is guided on the round column (43) in continuously height-adjustable and lockable (44b) manner.

15. A device in accordance with Claim 13 or 14,
**characterised in that**
the work piece guides of the screw-fastening type (30) consist of a curved base plate (32) containing counter-sinks (34a), wherein a positive connection can be established by screwing (34) onto the lower face of the work piece.

16. A device in accordance with any of the Claims 13 to 15,
**characterised in that**
the base plates (32, 42) of the work piece guides (30, 40) and the base plates (32b, 42b) of the work piece supporting means (31, 41) and also the pressing plunger (46) are provided on the work piece contacting surfaces thereof with an adhesive coating, especially one of abrasive paper (48), and **in that** the base plates (32, 42) comprise counter-sinks (34b) for a respective guide profile (33a) on the sides thereof opposite the side at which the work piece is.located, and **in that** on this side there are provided zero lines (39a) at an angle of approximately 90° which assist the readability of a scale (39).

17. A device in accordance with any of the Claims 13 to 16,
**characterised in that**
at least two mutually opposite indentations (35a) are worked into the edges of the base plates (32, 42) in parallel with the centre line of the guide profile (33a) and equally spaced to the left and right thereof, or, **in that** an edge (35b) is arranged at the one side of the centre line so that the tip (38a) of the head centring means (38) is flush with the centre of the indentations (35a) or with the edge (35b).

18. A device in accordance with Claim 17,
**characterised in that**
the surfaces of the base plates (32, 42) that make contact with the sides of the work piece and are coated with abrasive paper are left exposed in the vicinity of the indentations.

19. A device in accordance with any of the Claims 13 to 18,
**characterised in that**
there are provided mirror-imaged head centring means (38) which each consist of a tip (38a) including a notch (38b), a sunken slot (36) and a guide seat (33b) which are formed in the guide profile (33a), and **in that** there is arranged on the guide seat (33b) a scale (39) which is adapted to provide a reading for the displacement of the head centring means (38) relative to the zero lines (39a) of the base plates (32, 42), and **in that** there is provided in the sunken slot (36) a screw (37) which provides a fixing means for the head centring means (38) in the threads (37a) in the base plates (32, 42).

20. A device in accordance with any of the Claims 13 to 19,
**characterised in that**,
when milling inner curves on the rough curved member, there is provided at least one work piece supporting means (31) of the screw-fastening type, or alternatively at least one work piece. supporting means (41) of the clamp-fastening type, wherein the work piece supporting means (41) of the screw-fastening type consists of a vertical round column (43) that is arranged on a circular base plate (32b), and a support arm (44) which is arranged thereon in step-less height-adjustable and lockable (44a) manner and includes an integrated vertical rotatably mounted pressing spindle (46a) which actuates a pressing plunger (46) by means of a turning handle (46b), or by means of a clamping lever, or by means of an eccentric jack, or by means of a toggle action jack, wherein the support arm (44) is guided on the round column (43), and **in that** there is provided a support part (36), and the vertical heights at which the two work piece supporting means (31, 41) provide support and the heights at which the work piece guides (30, 40) provide support lie in the same work piece plane.

21. A device in accordance with any of the preceding Claims,
**characterised in that**,
for the purposes of milling outer curves, there are provided support plates which consist of a small support plate (11a) and a large support plate (11b), said plates being arranged in a plane that is parallel to the plane of the machining table whereby the upper faces thereof provide a supporting surface for the rough curved member, and **in that** support feet are arranged on the lower faces thereof so that the vertical heights at which the support plates (11a, 11b) provide support, the heights at which the work piece supporting means (31, 41) provide support and the heights at which the work piece guides (30, 40) provide support lie in the same work piece plane.

22. A device in accordance with any of the preceding Claims,
**characterised in that**
the frontal brackets (13) facing the milling head and arranged on the guide profile (16) each comprise a pivot bearing (13a) in which the large support plate (11b) is mounted in rotatable, lockable and removable manner, and **in that** the frontal brackets (13) each contain a thread in which the small support plates (11a) are adapted to be screwed by means of their support feet.

## Revendications

1. Dispositif pour fabriquer des arcs plein cintre et des arcs surbaissés sur des pièces à usiner, avec un appareil disposé de façon fixe et enlevant du matériau de pièces à usiner,
sur lequel une table de machine-outil est prévue avec une surface de support (8),
sur lequel il est prévu deux profilés de guidage (16) qui forment respectivement une arête d'appui (12) sensiblement rectiligne,
sur lequel les deux arrêtes d'appui (12) forment entre elles un angle pendant l'opération d'usinage, angle au sommet duquel est disposé l'appareil éloignant le matériau de pièce à usiner, par exemple un outil de fraisage (4) ;
sur lequel les profilés de guidage (16) peuvent être basculés autour du sommet et bloqués et
sur lequel il est prévu des extrémités d'alimentation (38), qui sont disposées sur la pièce (1) sur respectivement deux points d'écartement (3) de l'arc plein cintre ou de l'arc surbaissé à fabriquer et dont chacune s'appuie pendant l'opération d'usinage contre l'une des deux arêtes d'appui (12) ;
**caractérisé en ce que**
il est prévu des appareils (11, 13, 30, 31, 40, 41) qui maintiennent la pièce (1) dans un plan prédéfini et se trouvent à une distance constante de la surface de support (8) de la table de machine-outil,
et **en ce que** les deux profilés de guidage (16) sont disposés dans un plan au-dessous du plan de la pièce (1) au-dessus de la surface de support (8) de la table de machine-outil.

2. Dispositif selon la revendication 1,
**caractérisé en ce que**
la surface de support (8) de la table de machine-outil est constituée par une ou plusieurs plaques de support.

3. Dispositif selon la revendication 1 ou 2,
**caractérisé en ce que**
il est prévu dans la surface de support, de façon concentrique par rapport au sommet, des rainures (10) dans lesquelles passent des coulisseaux,
**en ce que** des éléments, par exemple des pattes (13), sont disposés sur les profilés de guidage (16) et
**en ce qu'**il est prévu une possibilité de blocage pour les coulisseaux.

4. Dispositif selon l'une quelconque des revendications précédentes,
**caractérisé en ce que**
les profilés de guidage (16) présentent chacun un bras de charge (14), qui est conçu de façon extensible dans le sens longitudinal en alignement avec l'arête d'appui avant (12).

5. Dispositif selon l'une quelconque des revendications précédentes,
**caractérisé en ce que**
le bras de charge (14) est protégé contre le glissement à l'extérieur et/ou il est prévu une possibilité de réglage pour la dureté ou la souplesse de manoeuvre.

6. Dispositif selon la revendication 4 ou la revendication 5,
**caractérisé en ce que**
le bras de charge (14) présente sur son extrémité dirigée vers le sommet une courbure d'alimentation dirigée vers le côté utilisateur (14a) et/ou un ergot (14b).

7. Dispositif selon l'une quelconque des revendications 4 à 6,
**caractérisé en ce que**
le bras de charge (14) présente un corps de levier (20), qui met à disposition la possibilité de déplacement longitudinal du bras de charge (14) en cas de contact par l'une des extrémités d'alimentation (38) et libère la zone de contact après l'emboîtement du bras de charge (14) dans le profilé de guidage.

8. Dispositif selon la revendication 7,
**caractérisé en ce que**
le corps de levier (20) comprend un boulon (26) tendu avec un ressort de pression et un alésage d'axe (25) disposé au centre du corps de levier (20), le corps de levier (20) présentant deux bras de levier (29) qui sont disposés dans une position d'environ 90 ° l'un par rapport à l'autre, le sommet de l'angle se situant au centre de l'alésage d'axe et respectivement un dégrossissage (28) creux en forme d'arc étant prévu sur le côté opposé des bras de levier (29), qui reçoit le côté avant rond en forme d'arc du boulon (26).

9. Dispositif selon l'une quelconque des revendications précédentes,
**caractérisé en ce que**
le profilé de guidage (16) présente sur le côté, opposé à l'axe (2), de l'outil de fraisage (4) un prolongement de profilé (18) qui est aligné par rapport à l'arête d'appui (12).

10. Dispositif selon la revendication 9,
**caractérisé en ce que**
le prolongement de profilé (18) présente un élargissement de support (18c), qui peut être bloqué et soutenu.

11. Dispositif selon l'une des quelconques des revendications précédentes,
**caractérisé en ce que**
les plaques de support de la table de machine-outil présentent à l'extérieur des arêtes rondes ou arrondies.

12. Dispositif selon l'une quelconque des revendications précédentes,
**caractérisé en ce que**
deux disques de réglage (5, 6) circulaires avec une grandeur différente du rayon extérieur sont prévus avec respectivement un alésage au centre, l'alésage étant conçu de façon à pouvoir être posé sur l'axe vide de la tête de fraisage (2), le rayon extérieur du disque de réglage (5) plus grand étant supérieur au rayon extérieur du petit disque de réglage (6) de la largeur du bras de charge (14) et **en ce que** le bras de charge avec son côté situé en face de l'axe de la tête de fraisage de l'arête avant se situe dans un plan tangentiel avec le grand disque de réglage.

13. Dispositif selon l'une quelconque des revendications précédentes,
**caractérisé en ce que**
il est prévu des guide-pièce (30) pour le vissage sur la pièce brute en arc et des guide-pièce (40) pour le serrage sur la pièce brute en arc, qui sont réalisés respectivement à gauche et à droite et se composent de plaques de base (32, 42) pouvant être reliées provisoirement de façon fixe avec la pièce bruce en arc, sur lequel sont disposées des extrémités d'alimentation (38) réglables de façon progressive, pouvant être bloquées, pouvant être désembrayées et réglables avec précision, qui sont disposées sur le côté inférieur de la pièce brute en arc et glissent le long de l'arête d'appui (12) des profilés de guidage (16), du bras de charge (14) et du prolongement du profilé (18).

14. Dispositif selon la revendication 13,
**caractérisé en ce que**
les guide-outil pour le serrage (40) se composent d'une plaque de base (42) en forme d'arc avec une colonne (43) ronde disposée verticalement, sur laquelle est disposé un bras support (44) en forme d'arc avec une broche de pression (46) intégrée, verticale et logée de façon pivotante, qui actionne un poinçon de pression (46a) au moyen d'une poignée tournante (46b), ou au moyen d'un levier de serrage, ou au moyen d'un tendeur à levier d'excentrique ou au moyen d'un tendeur à genouillère, le bras support (44) étant guidé au niveau de la colonne (43) ronde avec une possibilité de réglage progressif en hauteur et une possibilité de blocage (44b).

15. Dispositif selon la revendication 13 ou 14,
**caractérisé en ce que**
les guide-outil pour le vissage (30) se composent d'une plaque de base (32) en forme d'arc, qui contient des cavités (34a), de sorte qu'on peut avoir une liaison par adhérence par des vis (34) sur la face inférieure de la pièce.

16. Dispositif selon l'une quelconque des revendications 13 à 15,
**caractérisé en ce que**
les plaques de base (32, 42) des guide-outil (30, 40) et les plaques de base (32b, 42b) des supports de pièce (31, 41) et les poinçons de pression (46) sont pourvus sur leurs surfaces en contact avec le côté de pièce d'un revêtement adhérent, en particulier à base de papier émeri (48), et **en ce que** les plaques de base (32, 42) présentent sur les côtés opposés au côté de pièce des cavités (34b) pour respectivement un profilé de guidage (33a) et **en ce qu'** il est prévu sur ce côté dans un angle d'environ 90 ° des lignes de zéro (39a) qui mettent à disposition une conception visible pour une échelle graduée.

17. Dispositif selon l'une quelconque des revendications 13 à 16,
**caractérisé en ce que**
au moins deux encoches (35a) se faisant face sont incorporées sur les arêtes des plaques de base (32, 42) parallèlement à la ligne centrale du profilé de guidage (33a) respectivement à gauche et à droite et à égale distance ou **en ce qu'**une arête (35b) est disposée sur un côté de la ligne centrale, de sorte que l'extrémité (38a) de l'extrémité d'alimentation (38) est alignée au centre des entailles (35a) ou sur l'arête (35b).

18. Dispositif selon la revendication 17,
**caractérisé en ce que**,
les surfaces des plaques de base (32, 42) en contact avec les côtés de pièce et revêtues de papier émeri sont évidées dans la zone des entailles.

19. Dispositif selon l'une quelconque des revendications 13 à 18,
**caractérisé en ce que**,
il est prévu des extrémités d'alimentation (38) conçues de façon symétrique, qui comprennent chacune une extrémité (38a) avec un encliquetage (38b), un trou oblong (36) évidé et un rail de logement (33b), qui sont guidés dans le profilé de guidage (33a) et **en ce que** sur le logement de guidage (33b) est disposée une échelle graduée (39), qui permet de lire le déplacement des extrémités d'alimentation (38) par rapport aux lignes de zéro (39a) des plaques de base (32, 42) et **en ce qu'**il est prévu dans le trou oblong (36) évidé une vis (37) qui fournit une fixation de l'extrémité
d'alimentation (38) dans les filets (37a) des plaques de base (32, 42).

20. Dispositif selon l'une quelconque des revendications 13 à 19,
**caractérisé en ce que**,
lors du fraisage d'arcs intérieurs sur la pièce brute en arc, il est prévu au moins un support de pièce (31) à fixer pour le vissage, ou en remplacement au moins un support de pièce (41) pour le serrage, le support de pièce (41) pour le serrage comprenant une colonne (43) ronde, verticale et disposée sur une plaque de base circulaire et un bras support (44) guidé dessus, pouvant être réglé de façon progressive en hauteur et être bloqué (44a) avec une broche de pression (46a), intégrée, verticale et logée de façon pivotante, qui commande un poinçon de pression (46) au moyen d'une poignée tournante (46b) ou d'un levier de serrage ou d'un tendeur à levier d'excentrique ou d'un tendeur à genouillère, le bras support (44) étant guidé sur la colonne (43) ronde, **en ce qu'**une partie de support (36) est prévue, et les deux supports d'outil (31, 41) sont disposés avec leur hauteur d'appui vertical, avec la hauteur d'appui des guide-pièce (30, 40) sur le même plan de pièce.

21. Dispositif selon l'une quelconque des revendications précédentes,
**caractérisé en ce que**,
pour le fraisage d'arcs extérieurs, il est prévu des plaques de support qui se composent d'une petite plaque de support (11a) et d'une grande plaque de support (11b), et sont disposées dans un plan parallèle au plan de la table de machine-outil et mettent à disposition sur le côté supérieur une surface d'appui pour la pièce brute d'arc et **en ce que** des pieds de support sont disposés sur leur côté inférieur, de sorte que la hauteur d'appui vertical des plaques de support (11a, 11b) avec la hauteur d'appui des supports de pièce (31, 41) et la hauteur d'appui des guide-pièce (30, 40) sont disposées sur le même plan de pièce.

22. Dispositif selon l'une quelconque des revendications précédentes,
**caractérisé en ce que**,
des pattes (13) avant, disposées sur le profilé de guidage (16) et tournées vers la tête de fraisage présentent chacune un palier pivotant (13a), dans lequel la grande plaque de support (11b) est logée de façon pivotante, blocable et amovible, et **en ce que** les pattes (13) avant contiennent chacune un filet, sur lesquels les petites plaques de support (11a) sont disposées de façon à pouvoir être vissées avec leurs pieds de support.
